# EUROPÄISCHE PATENTSCHRIFT

(11) **EP 1 547 259 B1**
(45) Veröffentlichungstag und Bekanntmachung des Hinweises auf die Patenterteilung: **21.01.2009**
(21) Anmeldenummer: 02782757.5
(22) Anmeldetag: 04.11.2002
(51) Int. Cl.: H04B 1/38

(54) **Schutzhülle für elektronische Kleingeräte**
Protective sleeve for small portable electronic devices
Enveloppe protectrice pour petits appareils éléctroniques

(30) Priorität: 03.11.2001 DE 10153419; 13.12.2001 DE 10161477; 06.03.2002 DE 20203580 U; 20.06.2002 DE 20209610 U
(43) Veröffentlichungstag der Anmeldung: 29.06.2005
(73) Patentinhaber: Goros, Jean, 85540 Haar (DE)
(72) Erfinder: Goros, Jean, 85540 Haar (DE)
(74) Vertreter: Petra, Elke
(86) Internationale Anmeldenummer: PCT/DE2002/004083
(87) Internationale Veröffentlichungsnummer: WO 2003/041288

(56) Entgegenhaltungen:
- WO-A-92/07372
- DE-U- 20 005 086
- GB-A- 2 312 792
- IT-B- 1 225 031

## Beschreibung

Die Erfindung bezieht sich auf eine Schutzhülle für mobile elektronische Kleingeräte nach dem Oberbegriff des Anspruchs 1, die insbesondere für Mobil- oder Schnurlostelefone, aber auch Radio- und Fernseh-Steuergeräte geeignet sind.

Als Schutzhüllen zur Schlag- bzw. Stoßsicherung sowie Verkratz-Verhinderung werden bislang bei Mobiltelefonen/Handys sogenannte Handytaschen verwendet, in welche die Geräte eingeschoben werden. Diese sind aber in der Regel relativ teuer, da aufwändig in der Herstellung, verdecken das Telefon zur Gänze, schränken die Bedienbarkeit ein und sind relativ hinderlich, wenn das Gerät z.B. in enge Hosen- oder Rocktaschen geschoben werden soll. Auch wirken diese Handytaschen nicht ausreichend rutschhemmend.

Aus der DE 200 05 086 U1 ist eine Schutzhülle für ein Mobilfunktelefon bekannt, die insgesamt aus einem elastischen Material wie z. B. Naturkautschuk besteht, die über einen oberen und einen unteren kappenförmigen Bereich das Gerät beidseitig umfasst, wobei die Kappenteile über zwei seitliche Längselemente miteinander verbunden sind. Dadurch, dass die Kappenteile relativ hoch ausgebildet sind, können sie funktionswesentliche Teile wie Mikrofon und Tasten mit abdecken, wodurch Funktion und Bedienung erheblich gestört sind. Auch ist die Herstellung dieser bekannten Schutzhülle relativ aufwändig und muss z. B. durch Spritzgießen mit relativ teuren Werkzeugen hergestellt werden.

Auch ist aus den DE 100 65 506 A1 und DE 299 22 963 U1 sowie DE 200 04 630 U1 eine Schutzummantelung für Mobiltelefone bekannt, bei der wenigstens zwei schmale, bandförmige Schlaufen vorgesehen sind, die zueinander gekreuzt verlaufen, wobei eine Schlaufe die Außenmantelfläche des Gerätes umspannt, während die mindestens eine weitere Schlaufe senkrecht zur ersten Schlaufe und gleichzeitig quer um das Gerät gelegt ist. Dabei sind die Schlaufen allgemein schmäler als das Gerät ausgelegt, so dass an sich kein Kantenschutz vorhanden ist. Um die Handhabung des Gerätes nicht zu beeinträchtigen ist auch der genaue Verlauf der Quer-Schlaufenbänder insbesondere auf der Vorderseite des Gerätes auf den Gerätetyp abzustimmen. Auch ist die Herstellung dieser Schutzummantelung insbesondere wegen der quer verlaufenden Schlaufenbänder sehr aufwändig und dadurch relativ teuer.

WO92/07372 offenbart eine Schutzhülle für ein mobiles, elektronisches Gerät, bei der dickere Abschnitte um die Ecken und Kanten herum vorgesehen sind, die durch dünnere, dehnbare Abschnitte miteinander verbunden sind.

IT1225031 offenbart eine Schutzhülle für eine Fernbedienung. Die Schutzhülle besteht unter anderem aus einem U-förmigen Rahmen aus elastischen, aufblasbaren Material, einem das U schließenden transparenten Band aus elastischem Gewebe und einem die Unterseite bildenden Band.

Schließlich sind aus den EP 0 508 033 B1, AT 003 701 U2, US 4,836,256, US 5,265,720, WO 92/07372 A1 und FR 2 772 223 A1 Schutzhüllen bekannt, die als hohle Parallelepipede ausgebildet sind, mit mindestens einer stirnseitigen rechteckförmigen Öffnung zum Einfügen des Geräts, Bedienen der Tasten und als Einblicköffnung für den Display. Die innere lichte Höhe der in Rechteckform gefertigten Hüllen und deren an den Gerätestirnseiten sehr weit einwärts gezogenen Öffnungsränder sind dimensionsmäßig aus der Fertigung vorbestimmt. Abgesehen davon, dass sich größere Geräte nur sehr schwer in die Hüllen einführen lassen, sitzen die Hüllen bei Geräten unterschiedlicher Größe nicht mehr korrekt an den Geräten auf, wobei bei kleineren Gräten die Gefahr besteht, dass kein ausreichender Zugang mehr vorhanden bleibt für Tastenfeld und Display oder nicht ausreichend fest von der Hülle umgeben sind.

Aufgabe der Erfindung ist daher, eine Schutzhülle oben genannter Gattung anzugeben, die sehr einfach in Aufbau, Handhabung und Herstellung ist und gleichzeitig einen guten Schutz und insbesondere eine gute Rutschhemmung sicherstellt.

Diese Aufgabe wird erfindungsgemäß durch eine Schutzhülle oben genannter Gattung mit den kennzeichnenden Merkmalen des Anspruchs 1 gelöst. Vorteilhafte Ausgestaltungen der Schutzhülle sind in den Unteransprüchen definiert.

Demgemäss besteht die erfindungsgemäße Schutzhülle aus nur einer kreisförmigen oder ovalen elastisch dehnbaren Schlaufe, die ein Schlauchring aus einem elastischen, dehn baren Material ist, dessen Material, Durchmesser, Höhe und Wanddicke so ausgelegt sind, dass die äußere Mantelfläche bedeckt ist und zudem in auf dem Gerät straff aufgespanntem Zustand den Außenmantel des Gerätes so umspannt, dass die äußere Mantelfläche bedeckt ist und zudem die Kanten zu den beiden Gerätestirnflächen so weit umgriffen sind, dass durch die elastisch einwärts gezogenen Ränder der Schlaufe schmale Leisten gebildet sind, die die Stirnflächen rahmenförmig schmal bedecken. Die Schlaufe weist somit eine größere Aktivbreite auf als die Dicke/Höhe des Gerätes, so dass sie in um das Gerät gelegtem Zustand die Seitenflächen des Gerätes bedeckt und ihre über die Gerätewände überstehenden Seitenränder durch die Spannung im Schlaufenband nach dessen Aufziehen auf das Gerät sich so umlegen, dass sie die Stirnseiten des Gerätes entsprechend schmal abdecken. Rück- und Vorderseite des Gerätes sind somit über einen relativ schmalen Rand des unter Dehnungsstress befindlichen Bandes rahmenartig abgedeckt. Wird nun das Gerät entweder mit der Rück- oder mit der Vorderseite auf eine Unterlage aufgelegt, dann wird das Gerät nicht auf diesen Gehäuseseiten, Tasten oder gar auf dem Display aufliegen, sondern die flächenmäßige Abstützung erfolgt über den Schlaufenrahmen. Nachdem aber die Schutzhülle aus einem elastischen Material besteht, das zudem einen hohen Rutschwiderstand aufweist, ist hier der große Vorteil gegeben, dass ein mit der erfindungsgemäßen Schutzhülle versehenes Gerät auf einer schiefen und/oder glatten Ebene nicht abrutscht und somit ein wesentlicher Beitrag zur Sicherheit des Gerätes geleistet wird.

Eine vielseitig einsetzbare Schutzhülle wird erhalten, wenn die Schlaufe aus einem elastisch auf mindestens 300% dehnbaren Material gefertigt ist, wie Gummi, Kautschuk, Silikon, thermoplastischem Polyethylen, Elastomer, Latex o. ä. und eine Materialdicke von ca. 0,4 mm bis 2,5 mm, vorzugsweise von 0,7mm aufweist. Dadurch kann die Schutzhülle für Mobilgeräte unterschiedlichster Größe optimal verwendet werden. Durch die geringe Wanddicke der Schlaufe von vorzugsweise nur 0,7 mm besteht zudem die Möglichkeit, dass der Benutzer nachträglich, unter Verwendung eines einfachen, in der Verkaufsverpackung mitlieferbaren Stanzwerkzeugs selbst die notwendigen Löcher z. B. für Steckverbindungen, Antennen usw. oder Verzierungslöcher in den Schlauchring einbringen kann.

Bei der Fertigung der Schutzhülle in Form einer Schlaufe, die ein elastischer Schlauchring ist, ist von Vorteil, dass diese besonders einfach und kostengünstig herstellbar ist. Denn diese Ausführungsform kann sehr wirtschaftlich hergestellt werden, indem ein Schlauch entsprechenden Durchmessers und entsprechender Wanddicke in an sich bekannter Weise z. B. durch Extrudieren hergestellt wird, wonach einzelne Schlauchringe von dem Schlauch abgetrennt werden. Es ist sogar vorstellbar, bei relativ kleinen Handys z. B. von einem Fahrrad- oder Mofaschlauch einen Ring bestimmter Länge bzw. Breite abzuschneiden und einfach über das Handy zu ziehen.

Um eine besonders gute Elastizität auch bei etwas dickerer Schlaufenwandung zu erhalten, ist von Vorteil, wenn umfangsmittig an der Schlaufe Durchbrüche vorgesehen sind z. B. in Form von runden oder ovalen Löchern. Abgesehen davon, dass dadurch die Dehnbarkeit der Schlaufe wesentlich erhöht werden kann, wird gleichzeitig eine besondere ästhetische Wirkung erzielt, und es sind auch gleich Öffnungen vorhanden, die z. B. zum Hindurchführen der Antenne oder zur Zugängigkeit von Anschlußelementen dienen.

Eine optisch interessant anmutende weitere Ausführungsform, die zudem auch die Stoßsicherheit durch die Schutzhülle erhöht, kann dadurch erreicht werden, dass die ansonsten glatte, zylindrische Schlaufe an ihrem Außenmantel zueinander axial beabstandet mindestens zwei Ringwülste aufweist. Durch die zumindest streifenweise vorhandene Materialerhöhung können Schläge gut abgefangen werden. Sind dann mindestens zwei der Ringwülste so zueinander beabstandet, dass sie in auf dem Gerät aufgezogenem Zustand der Schutzhülle entlang der Gerätestirnkanten verlaufen, gleichzeitig von diesen abstehend, dann ist ein optimaler Kantenschutz vorhanden, und auch die Auflage des Gerätes über den Hüllenrahmen auf der entsprechenden Unterlage erfolgt sicherer und in gewissem Maße auch abgefederter.

Selbstverständlich kann die mit Wulstringen versehene Schlaufe dadurch hergestellt werden, dass ein Schlauchring, wie vorbeschrieben, verwendet wird, auf dessen Umfang Wülste in Form von z. B. Schnüren mit halbkreisförmigem Querschnitt aufgeklebt werden. Diese Herstellungsart ist aber relativ aufwändig. Daher ist besonders vorteilhaft, wenn erfindungsgemäß eine solche Profil-Schlaufe in Form eines Bandes hergestellt wird als Meterware z. B. in an sich bekanntem Extrudierverfahren. Danach werden von dem extrudierten Profilband der Geräteumfangslänge entsprechende Bandlängen abgetrennt, wonach diese Bandstücke über ihre Enden, z. B. Stoß an Stoß oder überlappend, durch Kleben, Nähen, mindestens einen Druckknopf, Klettverschlußelemente, Haken und Ösen, Magnete o. ä. zu einer Ringschlaufe verschlossen werden bzw. sind über diese Elemente entsprechend verschließbar. Hier können alle möglichen Verbindungssysteme in Betracht bezogen werden, wobei jeweils davon auszugehen ist, dass das Bandmaterial relativ elastisch ist und auch der optische Eindruck zufriedenstellend sein muss.

In besonderer Ausführungsform können die Stirnenden der aus Schlaufen mit je einem Ringwulst versehen sein, die in angelegtem Zustand der Schutzhülle jeweils das Gerät stirnseitig als schmaler Wulstrahmen abdecken. Abgesehen davon, dass durch diese endseitigen Ringwülste auch die stirnseitigen Auflagerahmen dicker sind und auch optisch durch die abgerundete Form besonders widerstandsfähig wirken, wird durch diese Materialverdickung die Elastizität in diesem Rahmenbereich etwas reduziert, so dass ein guter Zusammenhalt auf dem Gerät vorhanden ist.

Von Vorteil ist des weiteren, wenn die Schutzhüllenschlaufe in Querrichtung eine erhöhte Elastizität bzw. Dehnbarkeit aufweist, um auch bei Geräten unterschiedlicher Dicke ausreichend sicher und breit die Stirnflächen zu übergreifen. Hierfür ist das Schlaufen-Profilband in Querrichtung wirksam mit mindestens einer Dehnfalte z. B. in Zick-Zack-, Wellen- oder Mäanderform versehen, oder bei etwas dickerer Schlaufenwandung ist zumindest eine umfangsmittige dünnere Dehnfuge eingebracht. So ist besonders wirkungsvoll, wenn mehrere Wellen- oder Zick-Zack-Dehnfalten in gleichmäßiger Anordnung vorgesehen sind, so dass die Schutzhülle insgesamt als ziehharmonikaähnlicher Balg anmutet.

Erfindungsgemäß ist die Schutzhüllenschlaufe aus einem elastischen, dehnbaren Material wie Gummi, Kautschuk, einem Elastomer, thermoplastischen Polyethylen, Naturlatex oder Silikon gefertigt. Diese Materialien stellen im Zusammenwirken mit der entsprechenden Profil-Formgebung die hohe Formflexibilität der Schutzhülle sicher, so dass eine Hüllengröße für mehrere Gerätetypen und Gerätegrößen wirksam verwendbar ist. Selbstverständlich können durch die unterschiedliche Materialwahl und mögliche Farbgebung des Materials verschiedene optische Effekte erzielt werden. Dabei kann besonders vorteilhaft sein, einen durchsichtigen Silikonkautschuk zu verwenden, der zudem auch entsprechend bedruckbar ist, so dass z. B. bestimmte Aufschriften oder Motive auf dem Innenmantel des Bandes aufgebracht werden können, die von außen sehr gut einsehbar sind und zudem während des Gebrauchs nicht zerstört werden können. Auch besteht dann die Möglichkeit, ganz einfach unter die Schutzhülle einen kleinen Gegenstand oder ein Bildchen unterzuschieben, das dauernd sichtbar ist.

Ist das Schlaufenband in seinem Profilverlauf zumindest abschnittweise dick ausgelegt, so dass die Dehnbarkeit reduzierter ist, dann ist von Vorteil, wenn in diesen dickeren Materialabschnitten Längslöcher in notwendiger Anzahl eingebracht sind oder gar der Querschnitt wabenähnlich oder auch in Art eines Schaumgummis ausgelegt ist, wodurch die Elastizität des Bandes wesentlich erhöht werden kann, bei gleichzeitig optimaler Stoßdämpfeigenschaft.

Wie bereits vorerwähnt, können im Verlauf des Bandes Durchbrüche vorgesehen sein. Werden dann mindestens zwei der Durchbrüche axial benachbart so vorgesehen, dass der zwischenliegende Steg als Einhängeelement für eine Befestigungseinrichtung wie Haken, Karabiner oder Ring dienen kann, dann besteht die Möglichkeit, über diese das Gerät bedarfsweise zu befestigen z. B. an einer Kordel, an einem Gürtel usw. Um ein Ausreißen dieses Steges zu vermeiden, ist von Vorteil, wenn zudem innenseitig der Steg mit einer Verstärkung versehen wird, z. B. durch Ankleben einer Querleiste aus festem Kunststoff oder Metall an der Innenmantelfläche.

Schließlich ist von Vorteil, wenn an den mit Ringwülsten versehenen Stirnseiten des Schlaufenringes radial nach innen weisend mindestens zwei bogen- oder dreieckförmige Nippel-Fortsätze vorgesehen sind, die ca. die gleiche Wandstärke aufweisen wir die Stirnwülste. Hierdurch wird die Zone, in der die Nippel vorgesehen sind, unelastischer, so dass sich in gedehntem, um das Gerät aufgesetzten Zustand der Hülle ein stirnseitig hervorstehender Aufwurf jeweils am Ringwulst ergibt, der einen zusätzlichen Schutz bietet. Es können mehrere Nippel in gleichmäßiger Beabstandung zueinander am Ringwulst vorgesehen sein. Es können aber auch z. B. lediglich drei Nippel rund um das Display des Gerätes angeordnet sein, z. B. ein Nippel mittig oben und je einer seitlich vom Display, wodurch das Display einen besonderen Schutz erfährt.

Nachfolgend wir die Erfindung anhand mehrerer Ausführungsbeispiele unter Bezug auf die Zeichnung näher erläutert.

Es zeigen:
- Fig. 1:: eine perspektivische Ansicht eines Gerätes mit umgelegter Schutzhülle,
- Fig. 2:: eine perspektivische Ansicht einer Schutzhülle in Schlaufenform in Schlauchring-Ausführung mit Durchbrüchen,
- Fig. 3:: eine perspektivische Schnittansicht eines Schlauchteiles als Halbzeug zur Anfertigung der Schlaufen nach Fig. 2,
- Fig. 4:: eine perspektivische Ansicht auf eine Schutzhülle aus Profilband mit Verschließeinrichtung,
- Fig. 5:: eine teilweise Perspektivansicht mit Querschnitt eines Profilbandes mit mehreren Längswülsten,
- Fig. 6:: das Profilband nach Fig. 5 in auf dem Gerät in Form einer Schlaufe aufgespanntem Zustand,
- Fig. 7:: einen Querschnitt mit teilweiser Perspektivansicht eines Profilbandes in Balgausführung mit Endwülsten,
- Fig. 8:: das Profilband nach Fig. 7 in auf einem Gerät in Form einer Schlaufe umspannendem Zustand,
- Fig. 9:: einen Querschnitt eines Profilbandes in Ausführung mit mittiger Dehnzone und Halbkreis-Endwülsten,
- Fig. 10:: das Profilband nach Fig. 9 in auf einem Gerät in Form einer Schlaufe umspannendem Zustand,
- Fig. 11:: einen Querschnitt eines Profilbandes in Ausführung mit zwei Dehnfalten und nach innen weisenden Anliegeleisten,
- Fig. 12:: das Profilband nach Fig. 11 in auf einem Gerät in Form einer Schlaufe umspannendem Zustand,
- Fig. 13:: eine Stirnansicht einer Schutzhülle in Form einer Ring-Schlaufe mit Nippel-Fortsätzen,
- Fig. 14:: einen axialen Schnitt XIV - XIV durch die Schutzhülle nach Fig. 13,
- Fig. 15:: eine Detailansicht XV aus Fig. 13, einen dreieckigen Nippel-Fortsatz zeigend,
- Fig. 16:: eine Detailansicht wie in Fig. 15, mit einem bogenförmigen Nippel-Fortsatz,
- Fig. 17:: den Dreieck-Nippel-Fortsatz wie in Fig. 15, jedoch in gespanntem Zustand der Schutzhülle, und
- Fig. 18:: eine Perspektivansicht eines Gerätes mit aufgezogener Schutzhülle mit drei Nippeln benachbart zum Geräte-Display.

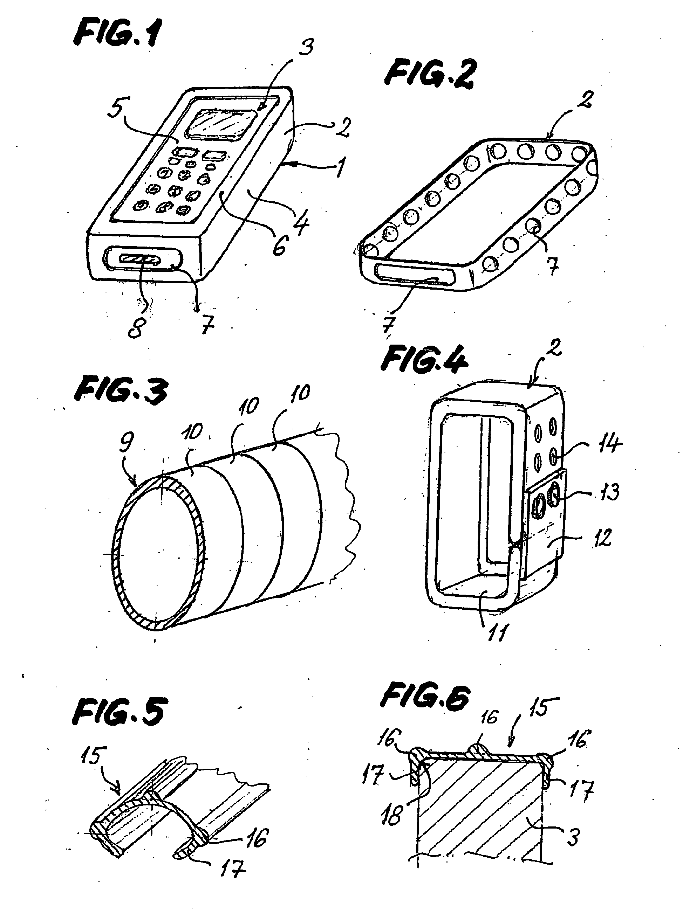

Wie aus Fig. 1 ersichtlich ist, besteht eine erfindungsgemäße Schutzhülle 1 im wesentlichen aus einer Schlaufe 2, die ein Fernmelde- oder Steuergerät 3, hier ersichtlich ein Handy, umfangmässig umgibt. Dabei ist das Schlaufenband so breit ausgelegt, dass es die Umfangswandung des Gerätes komplett bedeckt und zudem die Stirnwand 5 des Gerätes in Art eines schmalen Rahmens 6. übergreift. An der unteren Umfangsseite der Hülle ist ein Durchbruch 7 vorgesehen zur Zugängigkeit zum Anschlusselement 8 des Gerätes.

In Fig. 2 ist zu erkennen, dass in der aufgezeigten Ausführungsform die Schutzhüllen-Schlaufe 2 in Form eines geschlossenen Bandringes ausgebildet ist, wobei an der einen Seite der Anschlußelemente-Durchbruch7 vorgesehen ist, während an der gesamten übrigen Mantelfläche in ungleichmäßiger Beabstandung runde Durchbrüche 8 vorgesehen sind, die zur Elastizitätserhöhung des Schlaufenbandes beitragen.

Aus Fig. 3 ist zu erkennen, wie die Schlaufe 2 aus einem extrudierten Schlauch 9 durch Abschneiden bzw. Abtrennen von Schlaufenringen 10 gefertigt worden ist. Fig. 4 zeigt eine Ausführungsform der Schutzhülle, bei der die Schlaufe 2 aus einem Profilband 11 mit im wesentlichen U-förmigem Querschnitt gebildet ist. Es ist ersichtlich, dass dieses Profilband, das z. B. durch Extrudieren hergestellt wird, nach Ablängung auf bestimmte Länge Stoß an Stoß zusammengefügt ist und über eine Verbindungslasche 12, die einerseits an dem einen Profilbandende z.B. über Kleben befestigt ist, über seine andere Seite mit Hilfe von durch das zweite Profilbandende durchgeführte Druckknöpfe 13 zusammengehalten wird. In dem zweiten Profilbandende sind mehrere Löcher 14 vorgesehen, so dass die Möglichkeit besteht, das Profilband mit Hilfe der Lasche und der Druckknöpfe mehr oder weniger eng zusammenzuziehen.

Bei dem in Fig. 5 dargestellten weiteren Schlaufen-Profilband ist ersichtlich, dass dieses in entlastetem Zustand eine im wesentlichen bogenförmige Ausbildung hat, wobei auf der Außenwandung 3 Längswülste 16 vorgesehen sind. Dabei ist zu erkennen, dass in Fortsetzung von den äußeren Wülsten 16 je eine nach innen weisende Endleiste 17 vorgesehen ist.

Fig. 6 zeigt, wie das Profilband 15 nach Fig. 5 als Schlaufe das Gerät 3 umspannt und dabei aus der ursprünglich entlasteten Bogenform in eine quer und längs gedehnte U-Form gebracht ist. Die Wülste 16 sind so ausgebildet und angeordnet, dass die beiden äußeren Wülste über den Stirnkanten 18 des Gerätes 3 zu stehen kommen und einen besonderen Schlagschutz für diese darstellen sowie eine verbesserte Auflagenpufferwirkung bringen. Auch liegen die Endleisten 17 des Profils flach auf den Stirnseiten des Gerätes 3 an und bilden - wie aus Fig. 1 ersichtlich - den entsprechenden Rahmen 6.

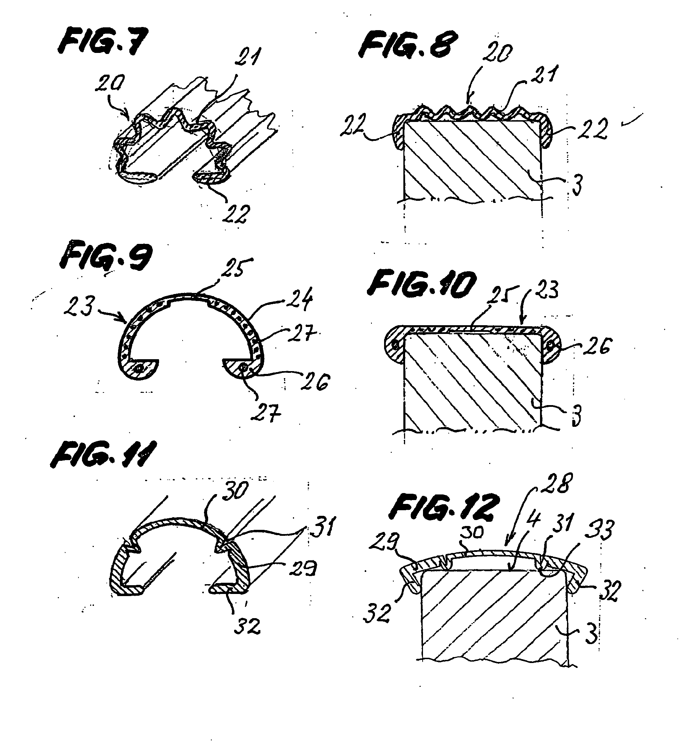

Das in Fig. 7 dargestellte Profilband weist im wesentlichen die Form eines Zick-Zack-Balges 21 auf und ist an den Bandkanten mit je einem Endwulst 22 versehen.

In Fig. 8 ist dargestellt, wie der Balg 21 über die Außenmantelwand des Gerätes 3 gespannt ist, während die Endwülste die Stirnseiten des Gerätes 3 umschließen.
Das in Fig. 9 dargestellte Profilband 23 weist im wesentlichen eine Halbkreisform auf, deren Wand 24 mittig eine dünnere Dehnzone 25 besitzt, während an den Bandenden bzw. -seiten Längswülste 26 mit halbkreisförmigem Querschnitt vorgesehen sind. In diesen Längswülsten verläuft je ein Längs-Hohlraum 27, in den ein Formdraht oder auch eine Kordel einlegbar ist. In den Wänden 24 können weitere Öffnungen 27 vorgesehen sein.

Fig. 10 zeigt, wie das Profil 23 nach Fig. 9 in auf dem Gerät 3 schlaufenförmig aufgespanntem Zustand flach gestreckt ist, während die endseitigen Wülste 26 die Stirnflächen des Gerätes umgreifen und gleichzeitig als Puffer dienen können.

Das in Fig. 11 dargestellte Profilband 28 ist in entlastetem Zustand im wesentlichen ebenfalls halbkreisförmig ausgebildet, wobei zwei sich gegenüberstehende dickere Wandteile 29 vorgesehen sind, zwischen denen ein dünneres und elastischeres Wandteil 30 vorhanden ist, das über jeweils eine Dehnfalte 31 mit dem dickeren Wandteil 29 verbunden ist, wodurch die Elastizität wesentlich erhöht wird. An den äußeren Seiten der Wandteile 29 sind radial weisend je eine Leiste 32 vorgesehen.

Aus Fig. 12 ist ersichtlich, wie das Profilband 28 in um das Gerät 3 schlaufenförmig aufgespanntem Zustand zu einer nur noch sehr schwachen Bogenform aufgedehnt ist, wobei das Band mit den Leisten 32 die Stirnseiten des Gerätes 3 umklammert. Gleichzeitig ist das Band in Richtung auf die Umfangswand 4 des Gerätes 3 über die Höcker 33 der Dehnfalten 31 so abgestützt, dass der mittige Wandteil 30 in Art einer elastischen Brücke über der Gerätewandung steht, wodurch eine zusätzliche Pufferwirkung erzielt wird.

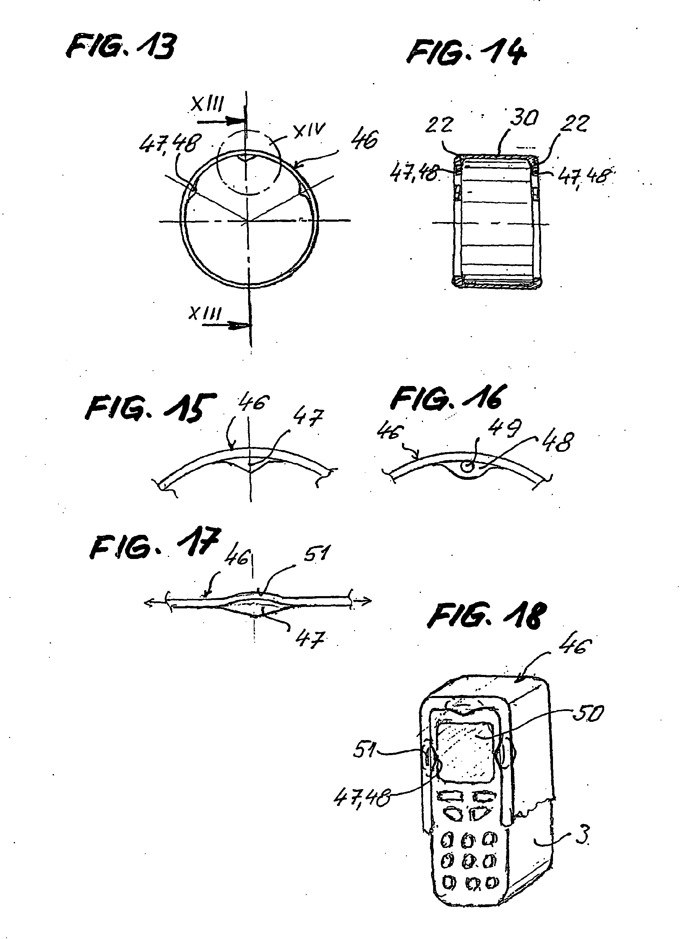

Fig. 13 und 14 zeigen eine Schutzhülle 46, die als Ringschlaufe z. B. durch Spritzgießen einstückig gefertigt ist. Sie weist ein zentrales, relativ dünnes, sehr elastisches Ringwandteil 30 auf, an dessen beiden Stirnseiten radial einwärts weisend je ein dickerer Endwulst 22 vorgesehen ist. An diesen Endwülsten 22 sind wiederum radial weisende Nippel-Fortsätze 47, 48 vorgesehen, die ca. die gleiche Materialstärke aufweisen wie die Endwülste 22. Beim dargestellten Ausführungsbeispiel sind drei Nippel-Fortsätze 47 vorgesehen, die in auf einem Gerät 3 aufgezogenen Zustand der Schutzhülle (siehe auch Fig. 18) symmetrisch zum Display 50 des Gerätes 3 angeordnet sind.

Fig. 15 zeigt einen Ausschnitt der ungespannten Schutzhülle 47, mit einem Nippel-Fortsatz 47 in Dreieck-Form, während Fig. 16 einen Nippel-Fortsatz 48 in Bogenform aufweist, der zudem ein Loch 49 besitzt zum Einhängen z. B. eines Quer-Bandes, vorzugsweise an der Geräterückseite.

Fig. 17 zeigt den Abschnitt der Schutzhülle 46 aus Fig. 15, jedoch in gespanntem Zustand. Dadurch dass der Nippel-Fortsatz 47 ebenfalls dicker ist als das mittige Wandteil 30, ist dieser Abschnitt weniger elastisch und es ergibt sich stirnseitig ein höckerförmiger Aufwurf 51, der einen zusätzlichen Schutz bietet.

Schließlich zeigt Fig. 18 die Schutzhülle 46 in auf einem Gerät 3 gedehnt aufgelegten Zustand. Dabei sind die drei auch in Fig. 13 dargestellten Nippel so angeordnet, dass sie das Display 50 zu drei Seiten umgeben und dieses insbesondere durch deren Aufwürfe 51 zusätzlich schützen.

### Bezugszeichenliste

1. Schutzhülle
2. Schlaufe
3. Gerät
4. Umfangswand
5. Stirnfläche
6. Rahmen / Leiste
7. Durchbruch
8. Anschlusselement
9. Schlauch
10. Schlaufenring
11. Profilband
12. Verbindungslasche
13. Druckknopf
14. Löcher
15. Profilband
16. Längswulst
17. Endleiste
18. Kanten
19.---
20. Profilband
21. Balg
22. Endwulst
23. Profilband
24. Wand
25.Dehnzone
26. Längswülste
27. Hohlraum
28. Profilwand
29. Wandteil
30. Wandteil
31. Dehnfalte
32. Leiste
33. Höcker
34. ---
35. ---
36. ---
37. ---
38.---
39. ---
40. ---
41.---
42. ---
43. ---
44. ---
45. ---
46. Schutzhülle (Nippel)
47. Nippel-Fortsatz, Dreieck
48. Nippel-Fortsatz, Bogen
49. Loch
50. Display
51. Aufwurf-Höcker

## Patentansprüche

1. Schutzhülle für mobile elektronische Kleingeräte, bestehend aus mindestens einer bandförmig verlaufenden Schlaufe, die in auf dem Gerät aufgesetztem Zustand wenigstens teilweise die Außenflächen des Geräts umgibt, dabei zumindest den Außenumfang des Gerätes umspannend, wobei nur eine kreisförmige oder ovale Schlaufe (2) vorgesehen ist, die ein Schlauchring (10, 15, 20, 23, 28,46) aus einem elastischen, dehn baren Material ist, dessen Material, Durchmesser, Höhe und Wanddicke so ausgelegt sind, dass die äußere Umfangsmantelfläche (4) des Geräts bedeckt ist und zudem in straff auf dem Außenmantel des Geräts aufgelegtem Zustand der Schlaufe deren endseitigen Ränder an beiden Gerätestirnflächen (5) über die Kanten des Geräts elastisch einwärts gezogen sind und in Form von schmalen Leisten (6) rahmenartig an diesen Stirnflächen (5) anliegen.

2. Schutzhülle nach Anspruch 1, **dadurch gekennzeichnet, dass** die Schlaufe aus elastisch um min. 300 % dehnbarem Material wie Gummi, Kautschuk, Silikon, thermoplastischem Polyethylen, Elastomer oder Latex gefertigt ist und eine Materialdicke von ca. 0,4 mm bis 2,5 mm besitzt.

3. Schutzhülle nach Anspruch 2, **dadurch gekennzeichnet, dass** die Schlaufe eine Materialdicke von ca. 0,7 mm besitzt.

4. Schutzhülle nach Anspruch 1, **dadurch gekennzeichnet, dass** die Ring-Schlaufe in Form eines langen Schlauches (9) hergestellt wird, von dem die Schlaufenringe (10) in bedarfsweiser Breite abgeschnitten werden.

5. Schutzhülle nach Anspruch 1, **dadurch gekennzeichnet, dass** die Schlaufe (2) an ihrem Außenmantel zueinander axial beabstandet mindestens zwei Ringwülste (16) aufweist, wobei die zwei Ringwülste (16) so auf dem Schlaufenaußenmantel angeordnet und gleichzeitig zueinander axial beabstandet sind, dass sie in am Gerät aufgezogenem Zustand der Schutzhülle entlang der Gerätestirnkanten (18) verlaufen, und somit von dieser entsprechend wegweisend abstehen.

6. Schutzhülle nach Anspruch 1 - 5, **dadurch gekennzeichnet, dass** die Schlaufen-Stirnenden mit je einem Ringwulst (22) versehen sind, die in angelegtem Zustand der Schutzhülle jeweils das Gerät stirnseitig als schmaler Wulstrahmen abdecken und dass die endseitigen Wülste (22, 26) als runde, halbrunde oder winkelig abgekröpfte Leisten (17, 32) ausgebildet sind und in nicht angelegtem Zustand des Schlaufenbandes dessen Axialquerschnitt im wesentlichen bogenförmig ist, wobei die Endwülste (22, 26) radial nach innen ragen.

7. Schutzhülle nach Anspruch 1, **dadurch gekennzeichnet, dass** das Schlaufenband oder Schlaufenring in axialer Richtung mindestens eine Dehnfalte (21, 31) in Zick-Zack-, Wellen- oder Mäanderform aufweist, mehrere Dehnfalten in gleichmäßiger Anordnung vorgesehen sein können, einen Ziehharmonika ähnlichen Balg (21) bildend oder dass mittensymmetrisch mindestens eine dünnere Dehnzone (25) vorgesehen ist, die durch entsprechende Aussparungen am Schlaufeninnenmantel eingebracht sind.

8. Schutzhülle nach mindestens einem der Ansprüche 1-3, 5 oder 7 **dadurch gekennzeichnet, dass** bei der Herstellung der Schlaufe ein Profilband (11, 20, 23, 28) als Meterware durch Extrusion erzeugt wird, von dem der Geräteumfangslänge entsprechende Bandlängen abgetrennt und das jeweils so abgetrennte Bandstück über seine Enden, Stoß an Stoß oder überlappend, durch Kleben, Nähen, mindestens einen Druckknopf (13), Klettverschlusselemente, Haken oder Ösen, Magnete zu einer Ringschlaufe verschlossen wird oder verschließbar ist.

9. Schutzhülle nach mindestens einem der vorhergehenden Ansprüche, **dadurch gekennzeichnet, dass** im Band Durchbrüche (7) für Anschlüsse, Antennen oder in regelmäßigen Abständen längsmittige Durchbrüche (7') vorgesehen sind, die während dem Ablängen des Schlauches oder Profilbandes oder in einem Folgeschritt eingebracht sind.

10. Schutzhülle nach einem der vorhergehenden Ansprüche, **dadurch gekennzeichnet, dass** im Schlaufenumfang mindestens zwei Durchbrüche (7) axial benachbart so vorgesehen sind, dass der zwischenliegende Steg als Einhängelement für eine Befestigungseinrichtung, wie Haken, Karabiner o.ä. dienen kann, wobei der Steg innenseitig mit einer Verstärkung gegen Ausreißen versehen sein kann.

11. Schutzhülle nach den Ansprüchen 1 bis 3 und 5, **dadurch gekennzeichnet, dass** an den Stirnseiten des Schlaufenringes (46) an den Endwülsten (22) radial nach innen weisend mindestens zwei bogen- oder dreieckförmige Nippel-Fortsätze (47 oder 48) vorgesehen sind, die ca. die gleiche Wandstärke aufweisen wie die Endwülste (22), wobei die Nippel-Fortsätze (47, 48) so angeordnet sind, dass sie in auf dem Gerät (3) aufgezogenen Zustand in der Zone des Display (50) symmetrisch angeordnet sind.

12. Schutzhülle nach Anspruch 11, **dadurch gekennzeichnet, dass** drei Nippel (47, 48) vorgesehen sind, wobei ein Nippel mittig oberhalb des Displays und je ein Nippel an je einer Displayseite angeordnet ist.

## Claims

1. Protective cover for small mobile electronic devices, consisting of at least one loop running in the form of a strip which when fitted on the device at least partly surrounds the external surfaces of the device, at least spanning the external periphery of the device, wherein only one circular or oval loop (2) is provided which is a tubular ring (10, 15, 20, 23, 28, 46) made of an elastic stretchable material, the material, diameter, height and wall thickness of which are such that the external peripheral surface (4) of the device is covered and in addition, when the loop is fitted rigidly on the external surface of the device its end edges are pulled elastically inwards over the edges of the device at both end faces (5) of the device and bear in the manner of a frame in the form of narrow strips (6) on these end faces (5).

2. Protective cover according to claim 1, **characterised in that** the loop is made of material which is stretchable elastically by at least 300% such as rubber, silicone, thermoplastic polyethylene, elastomer or latex and has a material thickness of approx. 0.4 mm to 2.5 mm.

3. Protective cover according to claim 2, **characterised in that** the loop has a material thickness of approx. 0.7 mm.

4. Protective cover according to claim 1, **characterised in that** the ring loop is produced in the form of a long tube (9) from which the loop rings (10) are cut with a breadth according to need.

5. Protective cover according to claim 1, **characterised in that** on its external surface the loop (2) exhibits at least two annular beads (16) spaced axially in relation to one another, the two annular beads (16) being arranged on the external surface of the loop and at the same time spaced axially in relation to one another so that when the protective cover is fitted on the device, they run along the end edges (18) of the device and thus protrude signally from it.

6. Protective cover according to claims 1 to 5, **characterised in that** the loop ends are in each case provided with an annular bead (22) which when the protective cover is fitted, in each case cover the device at the ends in the form of a narrow bead frame and **in that** the end beads (22, 26) are embodied as round, half-round or angularly offset ridges (17, 32) and, when the loop strip is not fitted in position, its axial cross-section is essentially curved, with the end beads (22, 26) projecting radially inwards.

7. Protective cover according to claim 1, **characterised in that** in the axial direction the loop strip or loop ring exhibits at least one extension fold (21, 31) in zigzag, corrugated or meander form, a plurality of extension folds can be provided arranged uniformly, forming a bellows (21) similar to an accordion or **in that** at least one thinner extension zone (25) is provided symmetrically in relation to the middle and formed by corresponding openings on the internal surface of the loop.

8. Protective cover according to at least one of claims 1 to 3, 5 or 7, **characterised in that** when the loop is produced, a profiled strip (11, 20, 23, 28) is formed by extrusion by the meter and from which the strip lengths corresponding to the length of the periphery of the device are cut and the strip cut off in this way is in each case closed or closable by means of its ends, butted end to end or overlapping, by gluing, stitching, at least one press-stud (13), hook and loop closures, hooks or eyes, magnets, forming a ring loop.

9. Protective cover according to at least one of the preceding claims, **characterised in that** the strip is provided with openings (7) for connectors, aerials or with longitudinal central openings (7') at regular intervals which are formed during the cutting of the tube or profiled strip or in a following step.

10. Protective cover according to one of the preceding claims, **characterised in that** at least two openings (7) are provided in the periphery of the loop axially neighbouring one another so that the web lying between them can serve as a suspension element for a fastening device, such as a hook, carabiner or the like, and on the inside the web can be provided with a reinforcement to prevent tearing.

11. Protective cover according to claims 1 to 3 and 5, **characterised in that** at the ends of the loop ring (46) the end beads (22) are provided with at least two curved or triangular extending nipples (47 or 48) which face radially inwards and have roughly the same wall thickness as the end beads (22), the extending nipples (47, 48) being arranged so that they are positioned symmetrically in the zone of the display (50) when fitted on the device (3) .

12. Protective cover according to claim 11, **characterised in that** three nipples (47, 48) are provided, with one nipple arranged centrally above the display and one nipple each on each side of the display.

## Revendications

1. Enveloppe protectrice pour de petits appareils électroniques mobiles, constituée d'au moins une manchette s'étendant en forme de bande et entourant à l'état posé sur l'appareil au moins en partie la surface extérieure de l'appareil en enserrant ainsi au moins le pourtour extérieur de l'appareil, dans laquelle il n'est prévu qu'une manchette (2) de forme circulaire ou ovale, qui est un anneau de tube souple (10, 15, 20, 23, 46) en une matière élastique, extensible, dont la matière, le diamètre, la hauteur et l'épaisseur de paroi sont conçus de façon à ce que la surface (4) latérale extérieure périphérique de l'appareil soit recouverte et en outre, à l'état de la manchette tendue sur la surface latérale extérieure de l'appareil, ses bords d'extrémité sont tirés élastiquement vers l'intérieur sur les deux surfaces (5) frontales de l'appareil au-dessus des arrêtes de l'appareil et s'appliquent à la manière d'un cadre sur ces surfaces (5) frontales sous la forme de rebords (6) étroits.

2. Enveloppe protectrice suivant la revendication 1,
**caractérisée en ce que** la manchette est en matière extensible, élastique d'au minimum 300 %, comme en gomme, en caoutchouc, en silicone, en polyéthylène thermoplastique, en élastomère ou en latex et a une épaisseur d'environ 0,4 mm à 2,5mm.

3. Enveloppe protectrice suivant la revendication 2,
**caractérisée en ce que** la manchette a une épaisseur d'environ de 0, 7 mm.

4. Enveloppe protectrice suivant la revendications 1,
**caractérisée en ce que** la manchette en anneau est fabriquée sous la forme d'un tube souple (9) long dont les anneaux (10) de manchette sont coupés à la largeur dont on a besoin.

5. Enveloppe protectrice suivant la revendications 1,
**caractérisée en ce que** la manchette (2) a sur sa surface latérale extérieure au moins deux bourrelets (16) annulaires à distance axialement l'un de l'autre, les deux bourrelets (16) annulaires étant disposés sur la surface latérale extérieure de la manchette et étant équidistants axialement de sorte qu'ils s'étendent, lorsque l'enveloppe protectrice est tirée sur l'appareil, le long des arrêtes (18) frontales de l'appareil et ainsi s'en écartent d'une manière correspondante.

6. Enveloppe protectrice suivant la revendication 1 à 5,
**caractérisée en ce que** les extrémités frontales de la manchette sont munies respectivement d'un bourrelet (22) annulaire qui, lorsque l'enveloppe protectrice est à l'état appliqué, recouvrent respectivement l'appareil du côté frontal sous la forme de cadres de bourrelet étroits et **en ce que** les bourrelets (22, 26) d'extrémité sont constitués sous la forme de rebords (17, 32) circulaires, hemi-circulaires ou coudés et, lorsque la bande formant la manchette n'est pas à l'état appliqué, sa section transversale axiale est sensiblement en forme d'arc, les bourrelets (22, 26) d'extrémité dépassant radialement vers l'intérieur.

7. Enveloppe protectrice suivant la revendication 1,
**caractérisée en ce que** la bande de manchette ou l'anneau de manchette a dans la direction axiale au moins une pliure (21, 31) d'allongement en forme de zigzag, d'ondulation ou sinueuse, plusieurs pliures d'allongement pouvant être disposées dans un agencement uniforme en formant un soufflet (21) semblable à un accordéon ou **en ce qu'**il est prévu symétriquement par rapport au milieu au moins une zone (25) d'allongement plus mince, qui est ménagée par des évidements correspondant de la surface latérale intérieure de la manchette.

8. Enveloppe protectrice suivant l'une au moins des revendications 1 à 3, 5 ou 7,
**caractérisée en ce que**, lorsque l'on fabrique la manchette, on produit par extrusion une bande (11, 20, 23, 28) profilé sous la forme d'un produit au mètre, dont on sépare des longueurs de bande correspondant à la longueur de pourtour de l'appareil et le tronçon de bande ainsi séparé et est fermé ou peut être fermé par ses extrémités bout à bout ou à recouvrement par collage, par couture, par au moins un bouton pression (13), par des éléments de fermeture auto-agrippante, par des crochets ou par des oeillets, par des aimants en une manchette annulaire.

9. Enveloppe protectrice suivant l'une des revendications précédentes,
**caractérisée en ce qu'**il est prévu dans la bande des traversées (7) pour des bornes, des antennes ou des traversées (7') au milieu en longueur en des distances régulières, qui sont ménagées pendant la mise à longueur du tube souple ou de la bande profilée ou dans un stade ultérieur.

10. Enveloppe protectrice suivant l'une des revendications précédentes,
**caractérisée en ce qu'**il est prévu dans le pourtour de la manchette au moins deux traversées (7) voisines axialement de façon à ce que la partie pleine intermédiaire puisse servir d'élément d'accrochage d'un dispositif de fixation, comme un crochet, un mousqueton ou autre, la partie pleine pouvant être munie du côté intérieur d'un renforcement à l'encontre de la déchirure.

11. Enveloppe protectrice suivant les revendications 1 à 3 et 5,
**caractérisée en ce que** sur les côtés frontaux de l'anneau (46) de manchette sont prévues sur les bourrelets (22) d'extrémité au moins deux prolongements (47 ou 48) en mamelon en forme d'arc ou de triangle, tournés radialement vers l'intérieur et ayant à peu près la même épaisseur de paroi que les bourrelets (22) d'extrémité, les prolongements (47, 48) en mamelon étant disposés de façon à être disposé symétriquement dans la zone de l'affichage 50) à l'état tiré sur l'appareil (3).

12. Enveloppe protectrice suivant la revendication,
**caractérisée en ce qu'**il est prévu trois mamelons (47, 48), un mamelon étant disposé au milieu au dessus de l'affichage et respectivement un mamelon étant disposé de chaque côté de l'affichage.
